# EUROPÄISCHE PATENTSCHRIFT

(11) **EP 2 984 364 B1**
(45) Veröffentlichungstag und Bekanntmachung des Hinweises auf die Patenterteilung: **25.07.2018**
(21) Anmeldenummer: 14719642.2
(22) Anmeldetag: 25.03.2014
(51) Int. Cl.: F16F 9/04, B60G 11/27

(54) **LUFTFEDER, INSBESONDERE FÜR FAHRZEUGE**
AIR SPRING, IN PARTICULAR FOR VEHICLES
RESSORT PNEUMATIQUE NOTAMMENT POUR VEHICULES

(30) Priorität: 09.04.2013 DE 102013206235
(43) Veröffentlichungstag der Anmeldung: 17.02.2016
(73) Patentinhaber: Continental Teves AG&Co. Ohg, 60488 Frankfurt (DE)
(72) Erfinder: BINDER, Klaus, 31157 Sarstedt (DE)
(74) Vertreter: Thiel, Linda
(86) Internationale Anmeldenummer: PCT/EP2014/055893
(87) Internationale Veröffentlichungsnummer: WO 2014/166726

(56) Entgegenhaltungen:
- EP-A1- 2 330 313
- US-A1- 2007 023 982
- US-A1- 2011 266 728
- US-B1- 6 637 733

## Beschreibung

Die Erfindung betrifft eine Luftfeder, insbesondere für Fahrzeuge, die mit einem Luftfederkolben und einem Luftfederdeckel zwischen Fahrwerk und Fahrzeugkarosserie eines Kraftfahrzeuges eingespannt ist, mit einem an Luftfederdeckel und Luftfederkolben dichtend befestigten Luftfederbalg aus elastomerem Material, welcher einen mit Druckluft gefüllten Arbeitsraum wenigstens teilweise begrenzt und der unter Ausbildung wenigstens einer Rollfalte an dem Luftfederkolben abrollt, wobei ein Endbereich des Luftfederbalges mittels eines Spannringes an einem Klemmabschnitt des Luftfederdeckels befestigt ist.

Luftfedereinrichtungen, auch kurz Luftfedern genannt, die zwischen Fahrwerk und Karosserie eingespannt sind und einen Luftfederbalg aufweisen, der wiederum zwischen den Luftfederbauteilen Luftfederdeckel und Luftfederkolben befestigt ist, sind in einer Vielzahl von Ausführungen bekannt. Die Luftfeder steht im Betrieb unter einem inneren Überdruck. Der Luftfederbalg rollt unter Last und bei Federbewegungen unter Bildung einer Rollfalte auf der Außenkontur wenigstens eines Luftfederkolbens ab. Eine derartige Luftfeder wird häufig in Straßen- oder Schienenfahrzeugen eingesetzt, um eine komfortable Federung zu erreichen.

Dabei existieren sowohl Luftfedern, bei denen der Luftfederbalg nur einseitig eine Rollfalte bildet, nämlich in der Regel auf dem Luftfederkolben, als auch Luftfedern, bei denen der Luftfederbalg unter Bildung einer beidseitigen (Roll-) Falte zwischen Luftfederdeckel und Luftfederkolben eingespannt ist.

Für die Befestigung des Endbereiches des Luftfederbalges an dem Luftfederdeckel werden in der Regel radial plastisch verformbare Spannringe eingesetzt, welche den Endbereich des Luftfederbalges am Klemmabschnitt des Luftfederdeckels form- und reibschlüssig verspannen.
Durch den inneren Überdruck und die daraus resultierenden Kräfte im Arbeitsraum der Luftfeder wird die Klemmverbindung zwischen Luftfederbalg und Luftfederdeckel bzw. Luftfederkolben jedoch stark belastet, so dass die Gefahr besteht, dass das Ende des Luftfederbalges aus der Klemmung, d.h. unter dem Spannring herausgezogen wird. Zudem verringert sich insbesondere bei großen Temperaturschwankungen die Dichtigkeit im Klemmbereich. Radiale Kraftkomponenten sorgen ferner dafür, dass die Balgpressung reduziert wird, da der Luftfederbalg unter Druckbeaufschlagung eine Aufweitung des Spannringes erzeugt.
Zur Befestigung des Luftfederbalges an einem der Luftfederbauteilen ist eine Vielzahl von Befestigungsvariationen bekannt. US 6,637,733 offenbart eine Luftfeder mit einem beispielhaften Befestigungselement gemäß des Oberbegriffs des Anspruchs 1. Beispielsweise beschreibt die DE 100 50 777 A1 eine Luftfeder mit einem konvex ausgebildeten Klemmbereich des Luftfederdeckels, auf welchem ein konkav ausgebildeter Klemmring aufgepresst ist. Es hat sich jedoch herausgestellt, dass bei den bekannten Klemmverbindungen die beschriebenen Probleme nur bedingt gelöst werden können.
Der Erfindung liegt die Aufgabe zugrunde, eine dahingehend verbesserte Luftfeder bereitzustellen, bei welcher ein Herausziehen des Luftfederbalges aus der Klemmung verhindert oder zumindest deutlich erschwert wird und deren Dichtigkeit sichergestellt werden kann.

Die der Erfindung zugrunde liegende Aufgabe wird mit den Merkmalen des unabhängigen Patentanspruchs 1 gelöst. Bevorzugte Ausführungsformen der Erfindung sind in den abhängigen Patentansprüchen angegeben.

Erfindungsgemäß ist ein weiterer Ring vorgesehen, welcher zur Entlastung des Spannringes im Endbereich des Luftfederbalges und außerhalb des Klemmabschnittes angeordnet ist, wobei dessen Innendurchmesser im Wesentlichen einem Innendurchmesser des Spannringes entspricht. Der Entlastungsring kann die Radialbelastungen aufnehmen, so dass der Spannring deutlich entlastet wird. Hierdurch kann sichergestellt werden, dass die Pressung des Spannringes nicht reduziert wird. Ferner muss ein Herausziehen des Luftfederbalges aus der Klemmung nicht befürchtet werden.
Gemäß einer vorteilhaften Ausführungsform kann der Entlastungsring in einfacher und kostengünstiger Weise mittels Luftdruck in dem Arbeitsraum auf dem Luftfederbalg positioniert vorgesehen sein.

Eine alternative Ausführungsform der Erfindung sieht dagegen vor, dass der Entlastungsring mittels eines Innenringes auf dem Luftfederbalg positioniert vorgesehen ist. Hierzu ist der Entlastungsring auf den Innenring aufgepresst vorgesehen.

Gemäß einer weiteren Ausführungsform weist der Luftfederbalg anvulkanisierte Positionierungsmittel zur Positionierung des Entlastungsringes auf, wodurch die Montage des Entlastungsringes wesentlich vereinfacht werden kann.

Vorzugsweise weist der Luftfederbalg wenigstens einen umlaufenden Wulst zur Positionierung des Entlastungsringes auf.

Alternativ können zur Positionierung des Entlastungsringes an den Luftfederbalg mehrere Gumminasen anvulkanisiert vorgesehen sein.

Weitere Merkmale, Vorteile und Anwendungsmöglichkeiten der Erfindung gehen aus den Unteransprüchen und der nachfolgenden Beschreibung von Ausführungsbeispielen sowie anhand der Zeichnung hervor.

Es zeigt jeweils stark schematisiert sowie im Schnitt:
Figur 1: einen Ausschnitt eines ersten Ausführungsbeispiels einer erfindungsgemäßen Luftfeder;
Figur 2: einen Ausschnitt eines zweiten Ausführungsbeispiels einer erfindungsgemäßen Luftfeder und
Figur 3: einen Ausschnitt eines dritten Ausführungsbeispiels einer erfindungsgemäßen Luftfeder.

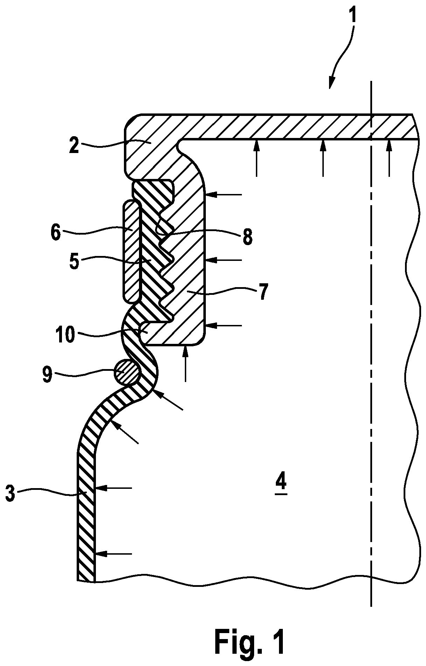

Fig. 1 zeigt in schematischer Darstellung und im Schnitt einen Ausschnitt eines ersten Ausführungsbeispiels einer Luftfeder 1, die mit einem nicht gezeigten Luftfederkolben und einem Luftfederdeckel 2 zwischen Fahrwerk und Fahrzeugkarosserie eines Kraftfahrzeuges eingespannt ist.

Die Luftfeder 1 weist einen an Luftfederdeckel 2 und Luftfederkolben dichtend befestigten Luftfederbalg 3 aus elastomerem Material auf, welcher einen mit Druckluft gefüllten Arbeitsraum 4 wenigstens teilweise begrenzt und der unter Ausbildung wenigstens einer nicht gezeigten Rollfalte an dem Luftfederkolben abrollt.

Wie in der Figur ersichtlich ist, ist ein Endbereich 5 des Luftfederbalges 3 mittels eines Spannringes 6 an einem Klemmabschnitt 7 des Luftfederdeckels 2 befestigt. Durch den inneren Überdruck und die daraus resultierenden, durch Pfeile angedeuteten Kräfte im Arbeitsraum 4 der Luftfeder 1 wird die Klemmverbindung zwischen Luftfederbalg 3 und Luftfederdeckel 2 stark belastet.

Daher weist der Klemmabschnitt 7 mehrere umlaufende Nuten 8 auf, in welche das Material des Luftfederbalges 3 beim Verpressen des Spannringes 6 eindringt. Diese dienen zum einen dem Erschweren des Herausziehens des Luftfederbalges 3 aus der Klemmverbindung, zum anderen verbessert sich hierdurch bei großen Temperaturschwankungen die Dichtigkeit im Klemmbereich.

Um die Gefahr des Herausziehens zu eliminieren sowie die Dichtigkeit der Klemmverbindung sicherzustellen, ist ein weiterer Ring 9 zur Entlastung des Spannringes 6 im Endbereich 5 des Luftfederbalges 3 und außerhalb des Klemmabschnittes 7 angeordnet. Dessen Innendurchmesser entspricht im Wesentlichen einem Innendurchmesser des Spannringes 6. Dies ermöglicht eine Aufnahme der Radialbelastungen durch den weiteren Ring 9, der nachfolgend als Entlastungsring bezeichnet wird, so dass der Spannring 6 deutlich entlastet und dass die Pressung des Spannringes 6 nicht reduziert wird.

Bei der gezeigten Ausführungsform wird der Entlastungsring 9 in einfacher und kostengünstiger Weise zumindest während der ersten Phase des Aufblasens der Luftfeder 1 manuell in Position gebracht.

Hierzu wird der Entlastungsring 9 vor dem Aufblasen der Luftfeder 1 manuell von unten an den Spannring 6 bzw. in diesem gezeigten Beispiel an einen umlaufenden Wulst 10 des Klemmabschnittes 7 gefügt. Durch das Aufblasen der Luftfeder 1 nimmt der Balgdurchmesser zu und hält den Entlastungsring 9 zunächst über Reibung gegen die Schwerkraft, so dass der Entlastungsring 9 nicht mehr in der Zeichnung nach unten fällt und eine manuelle Positionierung nicht mehr notwenig ist. Der Entlastungsring 9 wird also mittels des Luftdruckes in dem Arbeitsraum 4 auf dem Luftfederbalg 3 positioniert. Beim weiteren Aufblasen - entweder auf Auslieferdruck oder auf Betriebsdruck vergrößert sich der Balgdurchmesser weiter, so daß der Luftfederbalg von sich aus den Entlastungsring 9 nach oben gegen den Spannring 6 bzw. den Wulst 10 drückt.

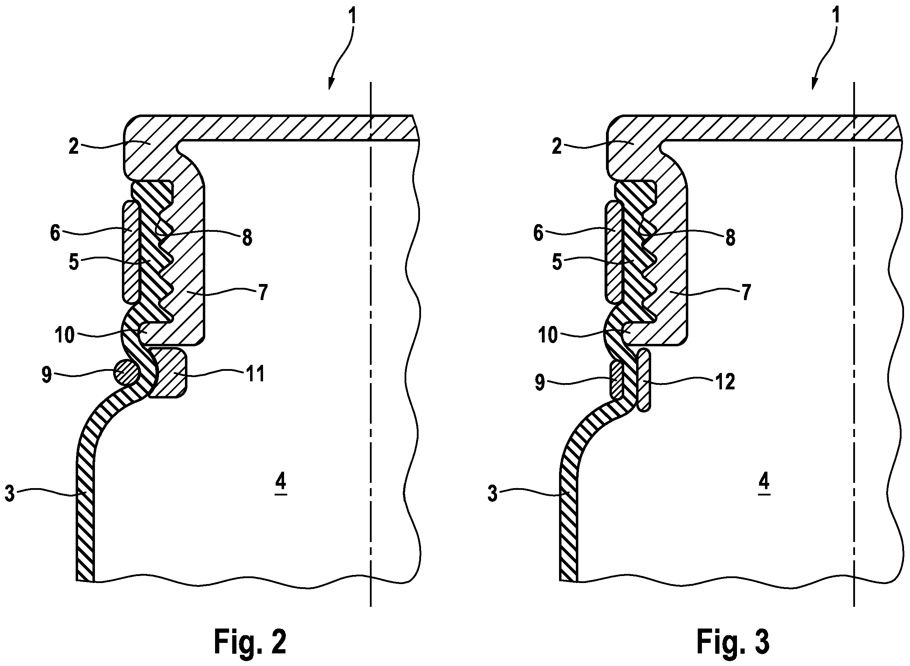

Gemäß den Fig. 2 und 3 sehen ein zweites und ein drittes Ausführungsbeispiel der Erfindung dagegen vor, dass der Entlastungsring 9 mittels eines Innenringes 11 bzw. 12 auf dem Luftfederbalg 3 positioniert ist.

Der Innenring 11 bzw. 12 wird hierzu im Luftfederbalg 3 am Wulst 10 des Klemmabschnittes 7 positioniert, auf den man über den Luftfederbalg 3 den Entlastungsring 9 radial von außen aufpresst. In diesem Fall ist der Durchmesser des Entlastungsrings 9 zunächst größer sein als sein endgültiger Durchmesser. Der Entlastungsring 9 wird also bei diesem Ausführungsbeispiel in radialer Richtung plastisch verformt und auf den Innenring 11 bzw. 12 gedrückt. Wie aus den Fig. 2 und 3 ersichtlich ist, kann der Innenring 11 bzw. 12 verschiedene, an die Form des Entlastungsringes 9 angepasste Ausgestaltungen aufweisen.

Der Luftfederbalg 3 kann ferner gemäß anderen alternativen Ausführungen beispielsweise anvulkanisierte Positionierungsmittel zur Positionierung des Entlastungsringes 9 aufweisen, wodurch die Montage des Entlastungsringes 9 wesentlich vereinfacht werden kann.

Denkbar sind hier etwa einzelne, auf dem Luftfederbalg 3 verteilte anvulkanisierte Gumminasen, welche eine Positionierung des Entlastungsringes 9 auch bei noch drucklosem Luftfederbalg 3 erlauben, ohne dass der Entlastungsring 9 herunterfällt.

Weiter kann der Luftfederbalg 3 wenigstens einen umlaufenden Wust zur Positionierung des Entlastungsringes 9 aufweisen.

### Bezugszeichenliste

- 1: Luftfeder
- 2: Luftfederdeckel
- 3: Luftfederbalg
- 4: Arbeitsraum
- 5: Endbereich
- 6: Spannring
- 7: Klemmabschnitt
- 8: Nut
- 9: Ring/Entlastungsring
- 10: Wulst
- 11: Innenring
- 12: Innenring

## Patentansprüche

1. Luftfeder (1), insbesondere für Fahrzeuge, die mit einem Luftfederkolben und einem Luftfederdeckel (2) zwischen Fahrwerk und Fahrzeugkarosserie eines Kraftfahrzeuges eingespannt ist, mit einem an Luftfederdeckel (2) und Luftfederkolben dichtend befestigten Luftfederbalg (3) aus elastomerem Material, welcher einen mit Druckluft gefüllten Arbeitsraum (4) wenigstens teilweise begrenzt und der unter Ausbildung wenigstens einer Rollfalte an dem Luftfederkolben abrollt, wobei ein Endbereich (5) des Luftfederbalges (3) mittels eines Spannringes (6) an einem Klemmabschnitt (7) des Luftfederdeckels (2) befestigt ist, wobei ein Entlastungsring (9) vorgesehen ist, welcher zur Entlastung des Spannringes (6) im Endbereich (5) des Luftfederbalges (3) und außerhalb des Klemmabschnittes (7) angeordnet ist, wobei dessen Innendurchmesser im Wesentlichen einem Innendurchmesser des Spannringes (6) entspricht, **dadurch gekennzeichnet, dass** der Entlastungsring (9) an einen umlaufenden Wulst (10) des Klemmabschnittes (7) gefügt ist.

2. Luftfeder nach Anspruch 1, **dadurch gekennzeichnet, dass** der Entlastungsring (9) mittels Luftdruck in dem Arbeitsraum (4) auf dem Luftfederbalg (3) positioniert vorgesehen ist.

3. Luftfeder nach Anspruch 1, **dadurch gekennzeichnet, dass** der Entlastungsring (9) mittels eines Innenringes (11; 12) auf dem Luftfederbalg (3) positioniert vorgesehen ist.

4. Luftfeder nach Anspruch 3, **dadurch gekennzeichnet, dass** der Entlastungsring (9) auf den Innenring (11;12) aufgepresst vorgesehen ist.

5. Luftfeder nach Anspruch 1, **dadurch gekennzeichnet, dass** der Luftfederbalg (3) anvulkanisierte Positionierungsmittel zur Positionierung des Entlastungsringes (9) aufweist.

6. Luftfeder nach Anspruch 5, **dadurch gekennzeichnet, dass** der Luftfederbalg (3) wenigstens einen umlaufenden Wulst zur Positionierung des Entlastungsringes (9) aufweist.

7. Luftfeder nach Anspruch 5, **dadurch gekennzeichnet, dass** zur Positionierung des Entlastungsringes (9) an den Luftfederbalg (3) mehrere Gumminasen anvulkanisiert vorgesehen sind.

## Claims

1. Air spring (1), in particular for vehicles, which is clamped with an air spring piston and an air spring cover (2) between the running gear and the vehicle body of a motor vehicle, having an air spring bellows (3), which is sealingly secured on the air spring cover (2) and the air spring piston, is made of an elastomeric material, at least partially delimits a working chamber (4) filled with compressed air, and unrolls so as to form at least one rolling fold on the air spring piston, wherein an end region (5) of the air spring bellows (3) is secured on a clamping section (7) of the air spring cover (2) by means of a clamping ring (6), wherein a relief ring (9) is provided, which is arranged in the end region (5) of the air spring bellows (3) and outside the clamping section (7) in order to relieve the clamping ring (6), wherein the inside diameter thereof substantially corresponds to an inside diameter of the clamping ring (6), **characterized in that** the relief ring (9) is joined to an encircling bead (10) of the clamping section (7).

2. Air spring according to Claim 1, **characterized in that** the relief ring (9) is provided so as to be positioned on the air spring bellows (3) by means of air pressure in the working chamber (4).

3. Air spring according to Claim 1, **characterized in that** the relief ring (9) is provided so as to be positioned on the air spring bellows (3) by means of an inner ring (11; 12).

4. Air spring according to Claim 3, **characterized in that** the relief ring (9) is provided so as to be pressed onto the inner ring (11; 12).

5. Air spring according to Claim 1, **characterized in that** the air spring bellows (3) has vulcanized-on positioning means for positioning the relief ring (9) .

6. Air spring according to Claim 5, **characterized in that** the air spring bellows (3) has at least one encircling bead for positioning the relief ring (9).

7. Air spring according to Claim 5, **characterized in that** a plurality of rubber noses are provided so as to be vulcanized onto the air spring bellows (3) for positioning the relief ring (9).

## Revendications

1. Ressort pneumatique (1), notamment pour véhicules, lequel est serré, avec un piston de ressort pneumatique et un couvercle de ressort pneumatique (2), entre le châssis et la carrosserie du véhicule d'un véhicule automobile, comprenant un soufflet de ressort pneumatique (3) constitué de matériau élastomère, fixé de manière hermétique au couvercle de ressort pneumatique (2) et au piston de ressort pneumatique, lequel limite au moins en partie un espace de travail (4) rempli d'air comprimé et roule sur le piston de ressort pneumatique en réalisant au moins un pli de roulement, une région d'extrémité (5) du soufflet de ressort pneumatique (3) étant fixée au moyen d'une bague de serrage (6) à une portion de serrage (7) du couvercle de ressort pneumatique (2), une bague de décharge de traction (9) étant prévue, laquelle est disposée pour la décharge de la bague de serrage (6) dans la région d'extrémité (5) du soufflet de ressort pneumatique (3) et à l'extérieur de la portion de serrage (7), son diamètre intérieur correspondant essentiellement à un diamètre intérieur de la bague de serrage (6), **caractérisé en ce que** la bague de décharge de traction (9) est assemblée à un bourrelet périphérique (10) de la portion de serrage (7).

2. Ressort pneumatique selon la revendication 1, **caractérisé en ce que** la bague de décharge de traction (9) est prévue de manière à être positionnée sur le soufflet de ressort pneumatique (3) au moyen de la pression d'air dans l'espace de travail (4).

3. Ressort pneumatique selon la revendication 1, **caractérisé en ce que** la bague de décharge de traction (9) est prévue de manière à être positionnée au moyen d'une bague interne (11 ; 12) sur le soufflet de ressort pneumatique (3).

4. Ressort pneumatique selon la revendication 3, **caractérisé en ce que** la bague de décharge de traction (9) est prévue de manière à être pressée sur la bague interne (11 ; 12).

5. Ressort pneumatique selon la revendication 1, **caractérisé en ce que** le soufflet de ressort pneumatique (3) présente des moyens de positionnement vulcanisés pour le positionnement de la bague de décharge de traction (9).

6. Ressort pneumatique selon la revendication 5, **caractérisé en ce que** le soufflet de ressort pneumatique (3) présente au moins un bourrelet périphérique pour le positionnement de la bague de décharge de traction (9).

7. Ressort pneumatique selon la revendication 5, **caractérisé en ce que** pour le positionnement de la bague de décharge de traction (9) sur le soufflet de ressort pneumatique (3) plusieurs ergots en caoutchouc appliqués par vulcanisation sont prévus.
